(19) Europäisches Patentamt / European Patent Office / Office européen des brevets

(11) **EP 2 103 696 A1**

(12) **EUROPEAN PATENT APPLICATION**
published in accordance with Art. 153(4) EPC

(43) Date of publication:
**23.09.2009 Bulletin 2009/39**

(51) Int Cl.:
*C21D 9/00* (2006.01)    *B21K 1/12* (2006.01)
*B21K 29/00* (2006.01)    *C21D 1/00* (2006.01)

(21) Application number: **07860537.5**

(22) Date of filing: **21.12.2007**

(86) International application number:
**PCT/JP2007/075340**

(87) International publication number:
**WO 2008/081955 (10.07.2008 Gazette 2008/28)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **28.12.2006 JP 2006356393**

(71) Applicant: **JFE Steel Corporation Tokyo, 100-0011 (JP)**

(72) Inventors:
• **HASE, Kazukuni Tokyo 100-0011 (JP)**
• **KIMURA, Hideto Tokyo 100-0011 (JP)**
• **TOYOOKA, Takaaki Tokyo 100-0011 (JP)**

(74) Representative: **Grünecker, Kinkeldey, Stockmair & Schwanhäusser Anwaltssozietät Leopoldstrasse 4 80802 München (DE)**

(54) **METHOD OF COOLING HOT FORGED PART, APPARATUS THEREFOR, AND PROCESS FOR PRODUCING HOT FORGED PART**

(57)    A hot forged part is provided, wherein in production of a axial part with a flange portion by using a steel material through hot forging, good cold workability is provided to the flange portion and, in addition, high fatigue strength is provided to the boundary portion between the flange portion and the axial portion. In cooling of the hot forged part having the flange portion and the axial portion, the hot forged part is supported in such a way that the axial direction of the above-described axial portion agrees with a vertical direction during hot forging of the hot forged part or after the hot forging, and a coolant is blown locally on the boundary portion between the flange portion and the axial portion from below the above-described flange portion.

FIG.5

**Description**

Technical Field

The present invention relates to a method and an apparatus for cooling hot forged parts, which are suitable for a partial heat treatment, of forged products typified by machine structural parts represented by automobile steel parts, e.g., axle units, such as a constant-velocity universal joint and a hub, and engine units, such as a crankshaft, and furthermore, a method for manufacturing hot forged parts.

Background Art

In general, machine structural parts are produced usually by hot forging, semi-hot forging, or warm forging and, thereafter, conducting finishing through machining. As for a production process of such parts, for example, Patent Document 1 discloses a typical process of forging production, that is, a process in which a material is cut and heated and, thereafter, forged, followed by conducting a heat treatment, if necessary.

Incidentally, in recent years, products for the above-described use have been required to have higher fatigue strength to implement desired miniaturization and thickness reduction for the purpose of weight reduction of the above-described parts, to which the products are applied. In this regard, Patent Document 1 discloses a method for manufacturing a hot forged part with high fatigue strength, wherein the entirety of the part is quenched after hot forging and, furthermore, the matrix is precipitation-hardened by a tempering treatment.

Patent Document 2 discloses a cooling apparatus, wherein after hot forging, cooling rate variations in the entirety of a forged product are eliminated and the overall cooling rate is controlled.

However, in the method described in Patent Document 1, since the part itself is directly cooled after hot forging, the strength of the entirety of the part increases. Therefore, the strength of a portion which is not required to have the fatigue strength increases unnecessarily. Since the strength and the workability of the material are reciprocal, the workability is sacrificed by increasing the strength of the portion at which the fatigue strength does not much matter. That is, a machine structural part for the above-described purpose is produced by forming a rough product shape through hot forging and, thereafter, finishing the entire surface layer of the resulting hot forged part through machining in general. Consequently, since machining and surface grinding are indispensable in the production of a machine structural part of this type, if the hardness of the entire part increases, a decrease in tool life becomes a significant problem inevitably.

In addition, a manufacturing facility for implementing the above-described method requires a heating facility to conduct a tempering treatment for the purpose of a precipitation hardening treatment separately. Therefore, the above-described method is not preferable from the viewpoint of energy saving.

Likewise, in the technology described in Patent Document 2, the cooling rate of the entire workpiece is controlled and, therefore, a reduction in machinability becomes a significant problem.

Patent Document 1: Japanese Patent No. 3100492
Patent Document 2: Japanese Patent No. 2936198

Disclosure of Invention

Under the above-described circumstances, for the facility described in any one of Patent Documents 1 and 2, it is difficult to provide a hot forged product excellent in fatigue properties and cold workability. More specifically, it is difficult for the disclosed facility to provide such a hot forged product that has high fatigue strength, which is required from stress occurred in association with, for example, weight reduction and compactness of the forged product, relative to the forged product obtained from the conventional method, and that has high machinability not only for, of course, an portion not requiring fatigue strength, but also for other portions when machining is performed after hot forging, thereby to make it possible to be easily finished.

In particular, regarding shaft parts with flanges, which are typified by automobile hubs, the maximum loads are applied repeatedly to base portions of the flanges, that is, boundary regions between the flanges and the axial portion, in the usage state. Therefore, it is most effective to enhance the fatigue strength in the boundary regions. On the other hand, regarding such parts as well, shaping into rough product shapes are conducted through hot forging, semi-hot forging, or warm forging and, thereafter, cold working, e.g., machining, is conducted so as to produce final products. Therefore, cold workability is required after hot forging. As a matter of course, the flange portions are also subjected to the cold working. It is effective for the flange portions, which is not required to have high fatigue strength, to enhance the cold workability rather than an increase in strength. In particular, regarding the above-described automobile hubs, almost entire surfaces of the parts are machined usually. Especially, since bolt holes are drilled in the flange portions, it is particularly effective to improve the cold workability of the flange portion from the viewpoint of an increase in life of machining blades.

Accordingly, it is an object of the present invention to provide a method and an apparatus for cooling a hot forged part, which are used in production of shaft parts with flange portions from steel materials through hot forging, which can enhance the fatigue strength of the boundary portions between the flange portions and the axial portions, and which can provide good cold workability to the flange portions, and furthermore, a method for manufacturing a hot forged part.

The inventors found that in production of a shaft part with a flange portion through hot forging, a hot forged part having a boundary portion excellent in fatigue strength and a flange portion excellent in cold workability was able to be obtained by conducting shaping into a shape having the flange portion and the axial portion and, thereafter, cooling the boundary portion between the flange portion and the axial portion locally. For example, when the boundary portion between the flange portion and the axial portion is cooled locally and quenched, a self tempering action occurs after the quenching because of heat recuperation from the portion, e.g., the flange portion, which has not been cooled locally, so that a boundary portion excellent in fatigue strength and a flange portion excellent in cold workability are obtained.

Furthermore, a boundary portion excellent in fatigue strength and a flange portion excellent in cold workability can also be obtained by conducting shaping into a rough shape having the flange portion and the axial portion and, thereafter, cooling the boundary portion between the flange portion and the axial portion locally so as to make the temperature of the boundary portion lower than the temperature of the flange portion, followed by forging, because a steel microstructure in the boundary portion becomes finer than a steel microstructure in the other portion and the strength is enhanced.

Here, in the cooling of the above-described boundary portion, it is important that the flange portion is in the state of being kept at high temperatures in order to maintain the cold workability of the flange portion. Then, regarding a method in which the boundary portion was cooled efficiently while the flange portion was kept at high temperatures, it was found that a coolant flowed downward after hitting against the boundary portion and the coolant did not flow to the flange portion by holding the axial portion in such a way that the axial direction thereof agreed with a vertical direction and blowing the coolant on the boundary portion from below the flange portion. Consequently, the present invention has been completed.

That is, the gist and the configuration of the present invention are as described below.

(1) A method for cooling a hot forged part having a flange portion and a axial portion, the method characterized by including the steps of supporting the hot forged part in such a way that the axial direction of the above-described axial portion agrees with a vertical direction during hot forging of the hot forged part or after the hot forging and blowing a coolant locally on the boundary portion between the flange portion and the axial portion from below the above-described flange portion.

(2) An apparatus for cooling a hot forged part having a flange portion and a axial portion, the apparatus characterized by including a support portion to support in such a way that the axial portion of the hot forged part is arranged in a vertical direction and a cooling nozzle which is disposed below the above-described flange portion of the hot forged part supported by the support portion and which blows a coolant on the boundary portion between the flange portion and the axial portion.

(3) The apparatus for cooling a hot forged part according to the above-described item (2), **characterized in that** the above-described cooling nozzle can conduct the above-described blowing from a plurality of places in a circumferential direction of the hot forged part.

(4) The apparatus for cooling a hot forged part according to the above-described item (3), **characterized in that** the above-described cooling nozzle is arranged in the shape of a ring around the above-described axial portion serving as a center axis.

(5) The apparatus for cooling a hot forged part according to the above-described item (2), **characterized in that** the above-described cooling nozzle has one slit or two or more slits which is disposed in the shape of a ring around the axial portion serving as a center axis of the above-described hot forged part and wherein the slit serves as an ejection hole of the above-described coolant.

(6) The apparatus for cooling a hot forged part according to any one of the above-described items (2) to (5), **characterized in that** the above-described support portion can support the above-described hot forged part rotating about the above-described axial portion serving as a center axis.

(7) A method for manufacturing a hot forged part including the steps of hot-forging a steel material so as to shape into a part having a flange portion and a axial portion, supporting the part after forging in such a way that the axial direction of the above-described axial portion agrees with a vertical direction, and blowing a coolant on the boundary portion between the flange portion and the axial portion from below the above-described flange portion so as to cool the boundary portion locally.

In this regard, the hot forging in the present invention refers to a step to forge through heating to 800°C or higher.

According to the present invention, in the production of the part having the flange portion and the axial portion through hot forging, the boundary portion between the flange portion and the axial portion can have high fatigue strength and, in addition, the flange portion can have good cold workability.

Brief Description of Drawings

Fig. 1 is a diagram showing the configuration of a hot forging facility.
Fig. 2a, Fig. 2b, Fig. 2c, and Fig. 2d are step diagrams showing the procedure of hot forging.
Fig. 3 is a perspective view showing a first embodiment of a cooling apparatus according to the present invention.
Fig. 4 is a plan view showing the first embodiment of the cooling apparatus according to the present invention.
Fig. 5 is a sectional view showing the first embodiment of the cooling apparatus according to the present invention.
Fig. 6 is a sectional view showing a second embodiment of a cooling apparatus according to the present invention.
Fig. 7a and Fig. 7b are diagrams showing a third embodiment of a cooling apparatus according to the present invention, Fig. 7a is a perspective view, and Fig. 7b is a sectional view.
Fig. 8 is a sectional view showing a fourth embodiment of a cooling apparatus according to the present invention.
Fig. 9 is a sectional view showing a fifth embodiment of a cooling apparatus according to the present invention.
Fig. 10 is a perspective view showing another embodiment of a cooling apparatus according to the present invention.
Fig. 11a and Fig. 11b are schematic diagrams for explaining a cooling apparatus according to a comparative example.

Reference numerals in the drawings denote the following:

| | |
|---|---|
| 1 | furnace |
| 2 | steel material |
| 3 | conveyer line |
| 4 | hot forging apparatus |
| 5 | cooling apparatus |
| 6 | pedestal |
| 6a | hollow portion of pedestal |
| 6b | support surface |
| 7 | cooling nozzle |
| 7a | cooling water ejection hole |
| 8 | cooling nozzle |
| 8a | ejection hole of cooling nozzle |
| 9 | flow meter |
| 10 | flow rate control valve |
| 20 | forged product |
| 22 | axial portion |
| 21 | flange portion |
| 20a | boundary regions between flange portion and axial portion (flange base portion) |
| 20b | hollow portion of forged product |
| 20c | inner surface side of flange base portion of forged product |
| A | center axis of forged product |
| D | ejection direction of cooling water |

Best Modes for Carrying Out the Invention

First, in order to obtain a hot forged part excellent in fatigue strength and cold workability, it is preferable that a hardened area is introduced in a region, which is particularly required to have the fatigue strength, of a forged product and the other region is specified to be an unhardened area by partial cooling after hot forging, and especially, the Vickers hardness $V_1$ of the above-described hardened area on the surface and the Vickers hardness $V_2$ of the above-described unhardened area satisfy the following formula.

$$(V_1 - V_2)/V_2 \geq 0.1$$

That is, if the value of $(V_1 - V_2)/V2$ is less than 0.1, an increase in strength of the hardened area is small and a sufficient effect of improving the fatigue strength is not obtained. In this regard, in order to increase the value of $(V_1 - V_2)/V2$, it has been previously conducted that initially, the entirety of the part is made to be an unhardened area (quenching is not conducted) after hot forging and, subsequently, a region required to have the fatigue strength is subjected to high-frequency quenching or the like. In this case, a quenching step is required separately after the hot forging. Therefore, the technology according to the present invention, in which the steel microstructure is made fine by subjecting a part at high temperatures after hot forging to quenching through partial cooling or conducting partial cooling at an intermediate stage in a hot forging step, is advantageous from the viewpoint of reduction of steps.

Furthermore, in the art where partial quenching is conducted by a separate quenching step after hot forging, the above-described value of $(V_1 - V_2)/V_2$, which represents the hardness increase rate of the hardened area relative to the hardness of the unhardened area, becomes large significantly. However, in the case where the hardened area is formed immediately after hot forging or at an intermediate stage through partial cooling, as in the present invention, the value of $(V_1 - V_2)/V2$ is about 0.8 or less at the maximum. Regarding the hardened area, since finishing is also conducted usually, it is preferable that the hardness of the hardened area does not become too high. In this sense as well, the technology according to the present invention is advantageous.

Next, an example of the hot forging and the condition of the following cooling in which $(V_1 - V_2)/V_2$ becomes 0.1 to 0.8 will be described.

A steel material is heated and led to a hot forging apparatus so as to conduct hot forging in accordance with common production of parts of this type. The thus obtained forged product is subjected to a cooling treatment, in which cooling is conducted from an $Ac_3$ point or higher to an $AC_1 - 150°C$ or lower at a rate of 20°C/s or more, partially. That is, after the hot forging, the region required to have high fatigue strength is cooled from the $Ac_3$ point or higher to the $AC_1 - 150°C$ or lower at a cooling rate of 20°C/s or more and, thereby, generation of ferrite during cooling can be suppressed and the microstructure can be made martensite and/or bainite.

Here, the partial cooling after the hot forging is conducted within a temperature rage from the $Ac_3$ point or higher to the $Ac_1 - 150°C$ or lower because cooling from the $Ac_3$ point or higher is indispensable to obtain a sufficient heat recuperation effect after cooling and cooling is conducted to the $Ac_1 - 150°C$ or lower in order to suppress generation of ferrite.

Thereafter, it is important that tempering is continuously effected within a temperature range not exceeding the $Ac_1$ point through heat recuperation based on the amount of heat held by the part. That is, if the temperature of tempering through heat recuperation exceeds the $Ac_1$ point, the microstructure formed through partial quenching becomes austenite again, and becomes ferrite-pearlite during the cooling step thereafter. In order to prevent this, it is important to conduct tempering within a temperature range not exceeding the $Ac_1$ point.

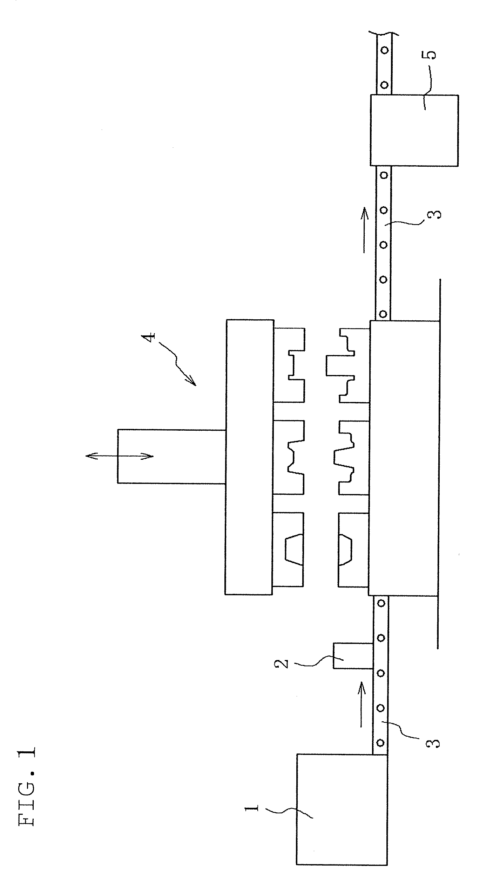

As described above, in order to obtain a hot forged part excellent in fatigue strength and cold workability, it is effective to conduct partial cooling after hot forging appropriately. An example of a hot forging facility therefor will be described in detail with reference to that shown in Fig. 1.

That is, in Fig. 1, reference numeral 1 denotes a furnace to heat a steel material, a hot forging apparatus 4 is disposed on a conveyer line 3, which is extended on the outlet side of the furnace 1, of the steel material 2 after heating and, furthermore, a partial cooling apparatus 5 is disposed at a location along the transport line 3 on the outlet side of the hot forging apparatus 4.

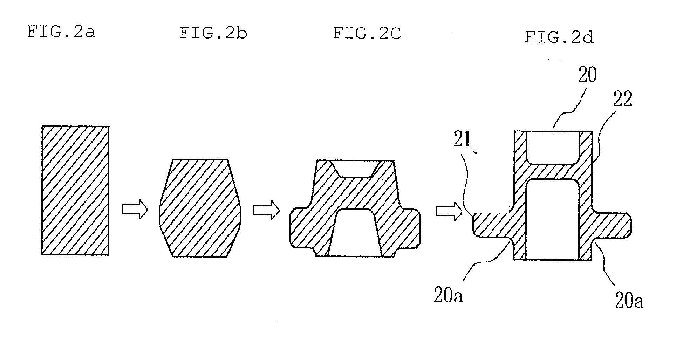

The steel material 2 after heating is die-forged into a desired shape with the hot forging apparatus 4. Subsequently, in the case where, for example, a part having a flange portion 21 and an axial portion 22, as shown in Fig. 2a, Fig. 2b, Fig. 2c, and Fig. 2d, is formed, the steel material 2 shown in Fig. 2a is shaped into a forged product 20 having a product shape before finishing with the hot forging apparatus 4 following the steps shown in Fig. 2b, Fig. 2c, and Fig. 2d.

Then, a specific region of the forged product 20 is subjected to cooling in the partial cooling apparatus 5 disposed on the outlet side of the hot forging apparatus 4.

Fig. 1 shows the example of a line layout in the case where partial cooling is conducted after hot forging. However, it is also possible to conduct partial cooling by using the partial cooling apparatus 5 in a hot forging process.

The present invention provides a cooling method and a cooling apparatus particularly favorably applied to the partial cooling apparatus 5 to conduct cooling localized to a flange base portion of the hot forged product 20 having the flange portion 21 and the axial portion 22, that is, the boundary portion 20a between the flange portion 21 and the axial portion 22, as shown in Fig. 2a, Fig. 2b, Fig. 2c, and Fig. 2d, by blowing a coolant, e.g., a cooling solution, thereon.

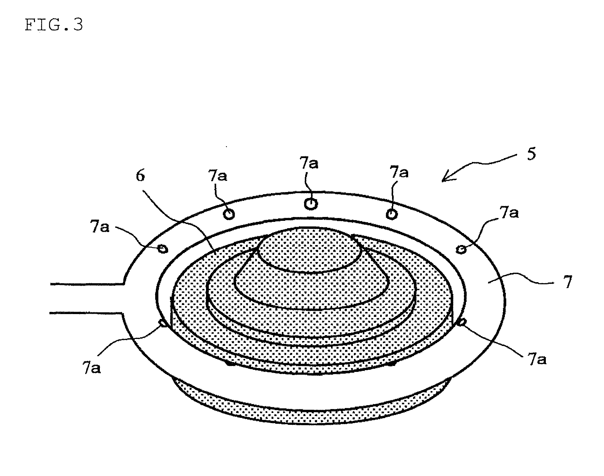

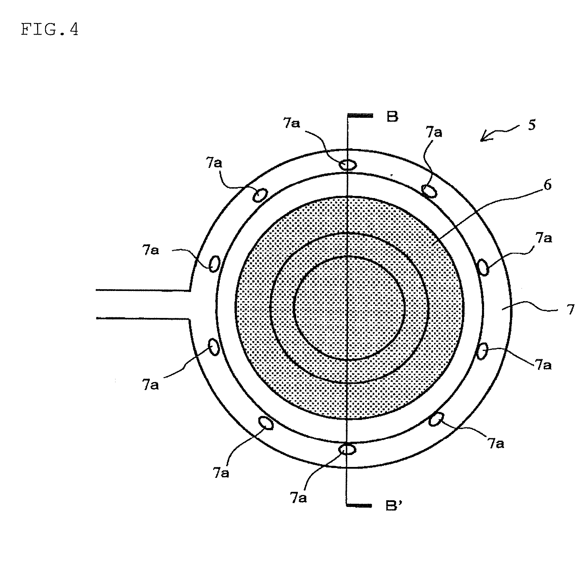

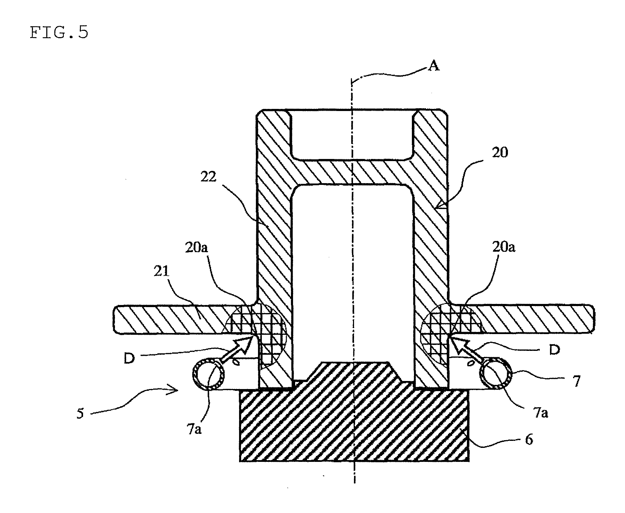

Now, Fig. 3, Fig. 4, and Fig. 5 are schematic diagrams for explaining a cooling apparatus according to the present invention. Fig. 3 is a perspective view showing a cooling apparatus, Fig. 4 is a plan view of the cooling apparatus, and Fig. 5 is a sectional view of the section indicated by a line B-B' shown in Fig. 4. Furthermore, Fig. 5 shows a state in which the forged product 20 is attached to the cooling apparatus.

This cooling apparatus 5 includes a pedestal 6, on which the forged product 20 is placed, and a cooling nozzle 7 to blow cooling water. The pedestal 6 serves as a support portion to support the lower end of the axial portion 22 of the forged product 20 from below in such a way that a direction of the center axis A of the axial portion 22 agrees with a vertical direction (plumb direction). Furthermore, regarding the cooling nozzle 7, a pipe is formed into the shape of a ring, and a plurality of cooling water ejection holes 7a are arranged along a circumferential direction of the ring. That is, the cooling water can be blown from a plurality of places in the circumferential direction of the hot forged part. Moreover, the center axis of the ring is configured to agree with the axis A of the axial portion 22 of the forged product. In addition, the location of the cooling nozzle 7 is adjusted in such a way as to be disposed below the flange portion 21 of the forged product 20 in the state in which the forged product 20 is placed on the pedestal 6, and the ejection holes are set in such a way that the cooling water blowing directions D are directed to the base portion of the flange 21, that is, the boundary portion 20a between the flange portion 21 and the axial portion 22 (hereafter referred to as flange base portion 20a).

The region to be cooled can be localized to the vicinity of the flange base portion 20a (a region with a grid-like hatch in the drawing) by forming the pedestal 6 and the cooling nozzle 7 as described above, and the cooling water blown on the boundary portion 20a of the forged product 20 flows downward after contacting the boundary portion 20a. Therefore, the amount of cooling water which spreads over the flange portion 21 after contacting the boundary portion 20a decreases, so that the flange portion is prevented from being cooled.

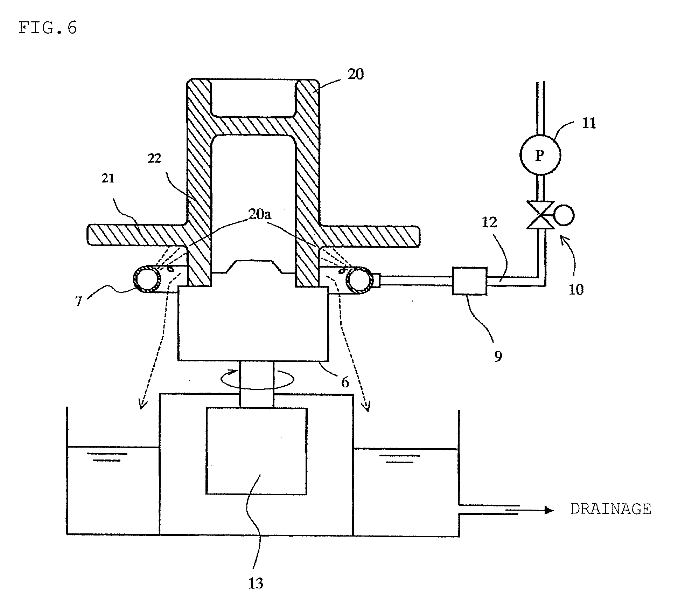

Furthermore, it is preferable that the pedestal 6 constituting the support portion can support the forged product 20 rotating on the axis A of the forged product 20. According to such a configuration, in cooling of the boundary portion 20a, it becomes possible to increase the uniformity of cooling along the circumferential direction of the forged product. Moreover, the flange base portion can be cooled by cooling from merely one place without blowing the cooling water from a plurality of places in the circumferential direction of the cooling nozzle 7 depending on the size of the forged product and the amount of cooling water from the cooling nozzle 7. Here, Fig. 6 is a schematic diagram showing the configuration of a cooling apparatus in which the pedestal 6 can rotate and support the forged product 20. The pedestal 6, on which the forged product 20 is placed, is configured to be driven to rotate by a motor 13 and, therefore, is a rotary pedestal. A ring-shaped cooling nozzle 7 has the same configuration as that shown in Fig. 3, Fig. 4, and Fig. 5. The cooling nozzle 7 is connected to a cooling water feed pipe 12. The cooling water feed pipe 12 is provided with a booster pump 11 to feed the cooling water, a flow rate control valve 10 to control the amount of ejection, and a flow meter 9 to monitor the flow rate. The cooling water ejected to the boundary portion 20a between the flange portion 21 and the axial portion 22 of the forged product flows downward, as indicated by broken line arrows, after cooling of the boundary portion 20a.

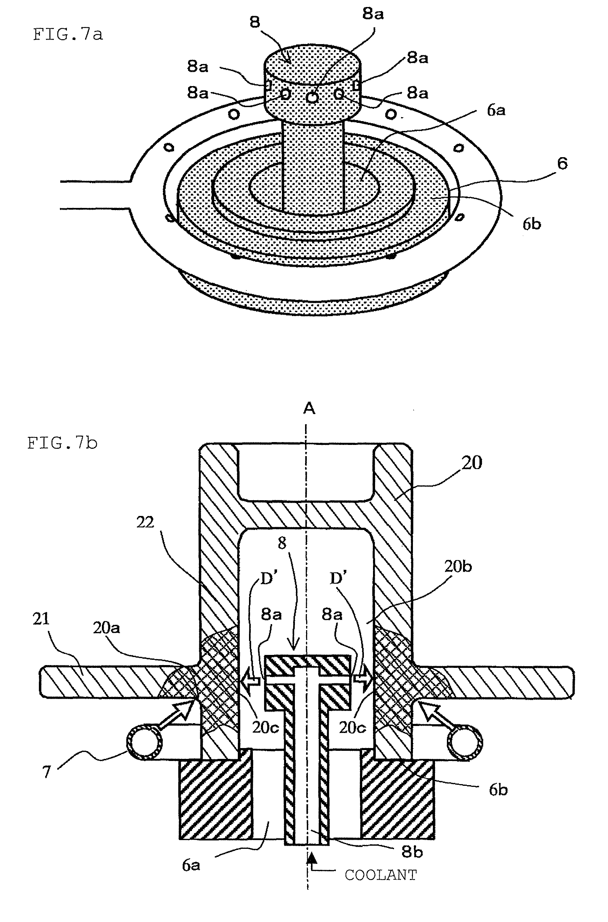

In addition, as shown in Fig. 7a and Fig. 7b, regarding the axial portion 22 of the forged product 20, in the case where a hollow portion 20b is formed up to the vicinity of the location of the flange in the axial direction of the forged product, the capability to cool the flange base portion can be further improved by cooling an inner surface side base portion 20c of the flange portion 22a from the hollow portion 20b side. Fig. 7a and Fig. 7b show an example thereof, Fig. 7a is a perspective view, and Fig. 7b is a sectional side view.

In the embodiment shown in Fig. 7a and Fig. 7b, a nozzle 8 for blowing the cooling water on the inner surface side base portion 20c from the hollow portion 20b side is further disposed as compared with the embodiment shown in Figs. 3 to 5. The pedestal 6 ensures a surface (support surface) 6b capable of supporting the forged product 20 and, in addition, a hollow portion 6a is disposed around the axis thereof. The hollow portion 6a is specified to have a space sufficient for including the nozzle 8 and, in addition, draining the cooling water ejected from the nozzle 8 without remaining in the hollow portion 20b of the forged product 20. The nozzle 8 is provided with a plurality of cooling water ejection holes 8a arranged along a circle around the axis A. Feeding of the cooling water to the ejection holes 8a is conducted through a cooling water feed pipe 8b connected passing the hollow portion 6a of the pedestal 6. The cooling water blowing directions D' of the ejection holes 8a are adjusted to direct the inner surface side of the flange base portion 20a. These ejection holes 8a constitute the cooling nozzle 8 to cool the inner surface 20c of the flange base portion 20a from the inner surface side of the axial portion. In the present embodiment, the flange base portion 20a is cooled from the outer surface side of the axial portion 20 with the cooling nozzle 7 and from the inner surface side of the axial portion 20 with the cooling nozzle 8. Consequently, a local cooling capability with respect to the flange base portion 20a is improved.

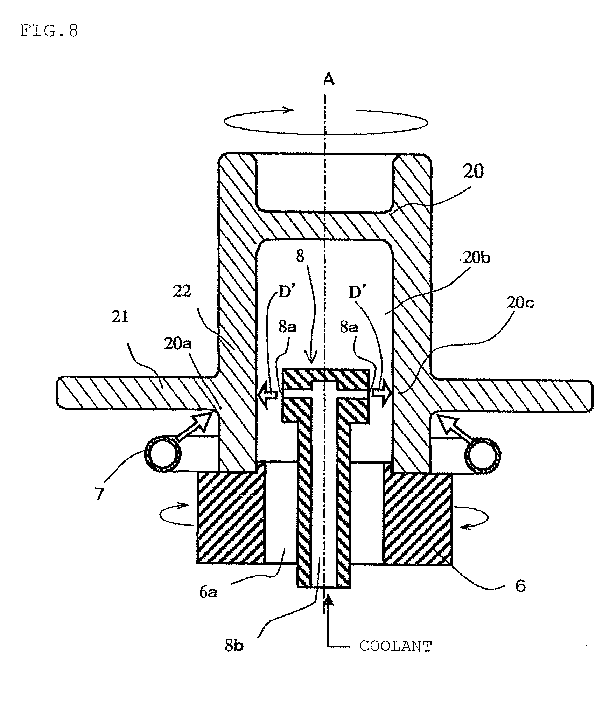

Fig. 8 shows an example in which the pedestal 6 can rotate and support the forged product 20 as compared with the embodiment shown in Fig. 7a and Fig. 7b. That is, the pedestal 6 is supported in such a way as to be able to rotate while the rotation center agrees with the center axis A of the forged product 20. The pedestal 6 can be driven to rotate by a drive apparatus (not shown in the drawing). Since the configuration of the nozzle 8 is the same as the configuration of the nozzle 8 shown in Fig.8, the explanation thereof will not be provided.

In the embodiment shown in Fig. 8, the flange base portion 20a is cooled from the outer surface side of the axial portion 20 with the cooling nozzle 7 and from the inner surface side of the axial portion 20 with the cooling nozzle 8. Consequently, a local cooling capability with respect to the base portion 20a is improved. Furthermore, pedestal 6 is rotated and, thereby, cooling can be conducted while the forged product 20 is rotated. Consequently, cooling of the flange base portion can be conducted uniformly along the circumferential direction.

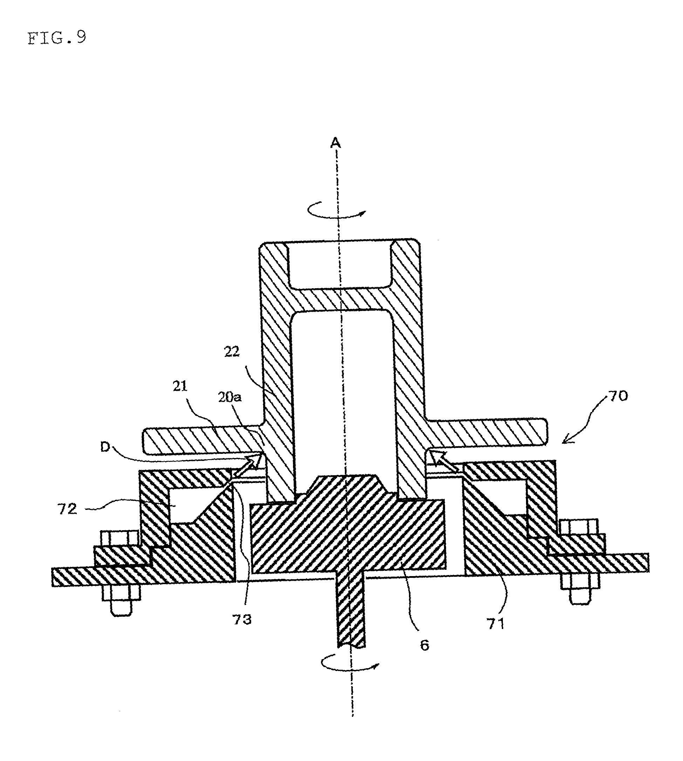

Moreover, Fig. 9 is a sectional view showing an embodiment in which a slit-shaped cooling nozzle 70 is adopted as the cooling nozzle. In this regard, since the configuration other than the cooling nozzle 70 is the same as the configuration shown in Fig. 7a and Fig. 7b, the illustration or the explanation will not be provided.

Regarding the nozzle 70, a ring-shaped member 71 having a shape surrounding the pedestal 6 and the forged product 20 supported by the pedestal 6, while the axis agrees with the center axis A of the forged product 20 and the pedestal 6, is disposed below the flange portion when the forged product is supported by the pedestal 6. A ring-shaped cooling water path 72 concentric with the ring-shaped member is disposed in the inside of the ring-shaped member 71. Furthermore, an annular slit 73 connecting the ring-shaped cooling water path 72 and the inner surface of the ring-shaped member 71 is disposed, and this ring-shaped slit 73 constitutes the cooling water ejection hole. The ring-shaped slit 73 is configured in such a way that the cooling water blown therefrom hits the flange base portion 20a of the forged product 20, as indicated by arrows D.

In the case where the slit-shaped nozzle is used as the cooling nozzle, as described above, a water jet blown therefrom is in the shape of a continuous ring. Consequently, the uniformity of cooling in the circumferential direction can be further improved in local cooling.

In this regard, in the example shown in Fig. 9, one ring-shaped slit is disposed. However, it is also possible to increase the number of slits and vary a slit width so as to increase the cooling capability.

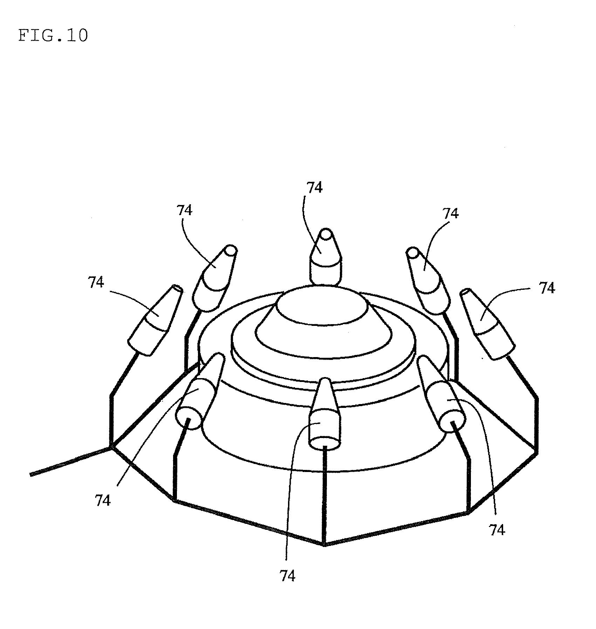

Incidentally, the shape of the nozzle to blow the cooling water on the boundary portion between the flange portion and the axial portion is not limited to the above-described shape in which a plurality of holes (ejection holes) are arranged in the shape of a ring or the shape of a slit. For example, as shown in Fig. 10, a plurality of cooling nozzles 74 may be disposed below the flange while being arranged in the shape of a concentric annular ring having the same axis as the axis of the forged product.

Furthermore, the above-described embodiment shows the example in which the cooling water serving as a coolant is blown from the cooling nozzle. However, the coolant is not limited to the water, and a cooling solution may be used, wherein the cooling capability is adjusted by blending a quenchant or the like appropriately.

EXAMPLE 1

A steel having a chemical component composition shown in Table 1 was melted in a vacuum melting furnace and, thereby, 100 kg of ingot was cast. Subsequently, the ingot was hot-forged into a steel bar of 65 mm in diameter and was led to a hot forging facility shown in Fig. 1.

Initially, this steel bar was heated to 1,200°C in a furnace 1. Thereafter, three stage hot forging shown in Fig. 2b, Fig. 2c, and Fig. 2d was conducted in a hot forging apparatus 4, so that a hot forged part 20 with a flange, as shown in Fig. 2d, was shaped. The diameter of the axial portion at the flange base portion of the hot forged part was 80 mm. The resulting forged product 20 was transported to a cooling apparatus immediately, and partial cooling localized to the flange base portion (boundary portion between the flange portion and the axial portion) 20a was conducted by ejecting the cooling water at a flow rate of 25/min, followed by air cooling. At this time, as for the cooling apparatus, the cooling apparatus 5 shown in Fig. 6 was used as Invention example 1, the cooling apparatus 5 shown in Fig. 8 was used as Invention example 2, and the cooling apparatus 5 shown in Fig. 9 was used as Invention example 3.

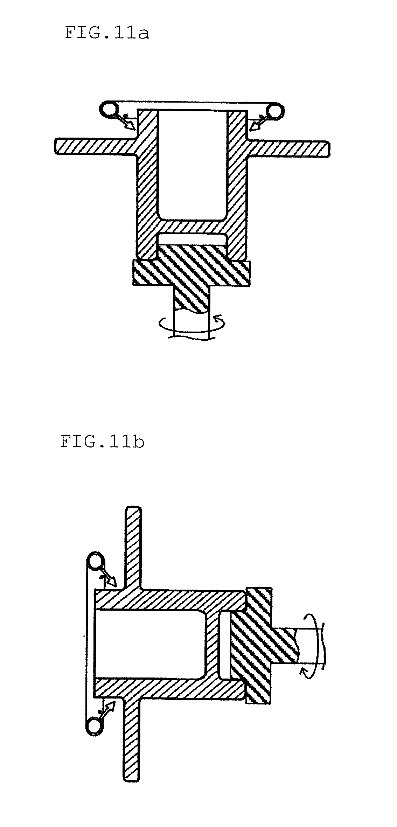

Furthermore, in Comparative example 1, as shown in Fig. 11a, the axial portion of the forged product was supported vertically, and the flange base portion was cooled from above. In Comparative example 2, as shown in Fig. 11b, the axial portion of the forged product was supported horizontally, and the flange base portion was cooled with a nozzle disposed beside the flange. Moreover, forged products were produced by a conventionally commonly used hot forging-air cooling process (Conventional example 1) and a hot forging-entire quenching and tempering process (Conventional example 2). In the hot forging-entire quenching and tempering process (Conventional example 2), after entire quenching, a tempering treatment was conducted at a tempering temperature of 600°C for 1 h. The temperature condition and the cooling condition in the hot forging are shown in Table 2.

In this regard, as for the shape of the cooling nozzle, in Invention examples 1 and 2 and Comparative examples 1 and 2, a pipe having an inner diameter of 23 mm and an outer dimension of 27.2 mm in diameter was formed into the shape of a ring having an inner diameter of 120 mm, and 60 holes (cooling water ejection holes) having a hole diameter of 1 mm were arranged at regular intervals along the circumferential direction of the ring. The distance between the ejection hole and the flange base portion was 30 mm. Regarding the cooling nozzle 8 to cool the inner surface side of flange base portion 20c in Invention example 2, 40 holes (cooling water ejection holes) having a hole diameter of 1 mm were arranged at regular intervals on the circumference having a diameter of 35 mm. As for this internal cooling as well, the flow rate of the cooling water was specified to be 25 l/min. In Invention example 3, the width of slit was specified to be 0.5 mm, and the distance between the slit and the flange base portion of the forged product was specified to be 30 mm.

Regarding the cooling, a thermocouple was attached to the flange base portion 20a, and the cooling rate in the cooling was measured. In the case where the forged product was rotated, connection to a rotary joint was conducted and, thereby, the temperature was able to be measured during rotation.

Regarding the thus obtained hot forged product, a microstructure observation, a hardness measurement, and a machining test of the base portion and the flange portion were conducted on the basis of the following procedure.

Initially, as for the microstructure observation, samples for microstructure observation were cut from the flange base portion 20a and the flange portion 21 of the resulting hot forged part, and the microstructures etched with nital were observed with an optical microscope and an electron microscope.

As for the measurement of the Vickers hardness, the Vickers hardness of each of portions 1 mm under the surface of the flange base portion 20a and the flange portion 21 was measured with a load of 300 gf. Furthermore, the hardness increase rate of the flange base portion relative to the hardness of the flange portion 21 was calculated by determining the value of

$$(Hv1 - Hv2)/Hv2 \times 100 \ (\%)$$

on the basis of the Vickers hardness Hv1 of the flange base portion and the Vickers hardness Hv2 of the flange portion.

The machinability based on the machining test was evaluated through machining around the perimeter of the flange portion. That is, a superhard tool was used, machining was conducted at a machining rate of 200 m/min, a depth of cut of 0.25 mm, and a feed rate of 0.5 mm/rev while a lubricant was sprayed, and the evaluation was conducted on the basis of a time required for cutting the entirety of the flange portion through machining. At this time, regarding the same steel type and forging condition, the time required for machining of a product resulting from a conventional hot forging-air cooling process was assumed to be t1, the time required for machining in each of Invention examples, Comparative examples, and Conventional examples was assumed to be t2, and the evaluation was conducted on the basis of the ratio of machining time reduction of t2 relative to t1, (t2 - t1) /t1. The results thereof are also shown in Table 2.

Table 1

| Steel type No. | Chemical composition (percent by mass) | | | | | | | |
|---|---|---|---|---|---|---|---|---|
| | C | Si | Mn | Mo | P | S | Al | Cr |
| 1 | 0.54 | 0.23 | 0.83 | - | 0.014 | 0.015 | 0.026 | 0.2 |
| 2 | 0.45 | 0.66 | 0.55 | 0.36 | 0.010 | 0.010 | 0.030 | - |

Table 2

| No. | Steel type | Cooling apparatus | Hot forging temperature (°C) | Cooling start temperature (°C) | Cooling rate (°C/s) | Cooling stop temperature (°C) | Heat recuperation maximum temperature | Boundary portion (joint portion) | | Flange portion | | Hardness increase rate | Machining time ratio | Remarks |
|---|---|---|---|---|---|---|---|---|---|---|---|---|---|---|
| | | | | | | | | Microstructure* | Hardness (Hv) | Microstructure* | Hardness (Hv) | (%) | | |
| 1 | 1 | Invention example 1 | 1150 | 1050 | 38 | 231 | 562 | M+B | 328 | F+P | 241 | 36.1 | 1.1 | Hole-shaped nozzle (only outer surface) nozzle and outer |
| 2 | | Invention example 2 | 1150 | 1050 | 40 | 228 | 558 | M+B | 336 | F+P | 238 | 41.2 | 1.2 | Hole-shaped (inner surfaces) |
| 3 | | Invention example 3 | 1150 | 1050 | 37 | 239 | 564 | M+B | 331 | F+P | 237 | 39.7 | 1.1 | Slit-shaped nozzle (only outer surface) |
| 4 | | Comparative example 1 | 1150 | 1050 | 32 | 234 | 425 | M+B | 384 | M+B | 378 | 1.6 | 4.8 | Vertically arranged shaft, cooled from above with hote-shaped nozzle |

(continued)

| No. | Steel type | Cooling apparatus | Hot forging temperature (°C) | Cooling start temperature (°C) | Cooling rate (°C/s) | Cooling stop temperature (°C) | Heat recuperation maximum temperature | Boundary portion (joint portion) | | Flange portion | | Hardness increase rate | Machining time ratio | Remarks |
|---|---|---|---|---|---|---|---|---|---|---|---|---|---|---|
| | | | | | | | | Microstructure* | Hardness (Hv) | Microstructure* | Hardness (Hv) | (%) | | |
| 5 | | Comparative example 2 | 1150 | 1050 | 34 | 229 | 396 | M+B | 379 | M+B | 373 | 1.6 | 5.3 | Horizontally arranged shaft, cooled laterally with hole-shaped nozzle |
| 6 | | Conventional example 1 | 1150 | 1050 | 0.5 | - | - | F+P | 239 | F+P | 242 | -1.2 | 1.0 | Air cooling after forging |
| 7 | | Conventional example 2 | 1150 | 1050 | 54 | 80 | - | M | 345 | M | 243 | 0.6 | 4.2 | Entire quenching and tempering, after forging |
| 8 | | Invention example 1 | 820 | 780 | 36 | 232 | 543 | M+B | 338 | F+P | 238 | 42.0 | 1.2 | Hole-shaped nozzle (only outer surface) |

| No. | Steel type | Cooling apparatus | Hot forging temperature (°C) | Cooling start temperature (°C) | Cooling rate (°C/s) | Cooling stop temperature (°C) | Heat recuperation maximum temperature | Boundary portion (joint portion) | | Flange portion | | Hardness increase rate | Machining time ratio | Remarks |
|---|---|---|---|---|---|---|---|---|---|---|---|---|---|---|
| | | | | | | | | Microstructure* | Hardness (Hv) | Microstructure* | Hardness (Hv) | (%) | | |
| 9 | | Invention example 2 | 820 | 780 | 39 | 230 | 547 | M+B | 345 | F+P | 241 | 43.2 | 1.2 | Hole-shaped nozzle (inner and outer surfaces) |
| 10 | | Invention example 3 | 820 | 780 | 35 | 235 | 552 | M+B | 346 | F+P | 239 | 44.8 | 1.2 | Slit-shaped nozzle (only outer surface) |
| 11 | | Comparative example 1 | 820 | 780 | 29 | 245 | 395 | M+B | 402 | M+B | 394 | 2.0 | 5.2 | Vertically arranged shaft, cooled from above with hole-shaped nozzle |

(continued)

| No. | Steel type | Cooling apparatus | Hot forging temperature (°C) | Cooling start temperature (°C) | Cooling rate (°C/s) | Cooling stop temperature (°C) | Heat recuperation maximum temperature | Boundary portion (joint portion) | | Flange portion | | Hardness increase rate | Machining time ratio | Remarks |
|---|---|---|---|---|---|---|---|---|---|---|---|---|---|---|
| | | | | | | | | Microstructure* | Hardness (Hv) | Microstructure* | Hardness (Hv) | (%) | | |
| 12 | | Comparative example 2 | 820 | 780 | 29 | 230 | 269 | M+B | 395 | M+B | 387 | 2.1 | 5.6 | Horizontally arranged shaft, cooled laterally with hole-shaped nozzle |
| 13 | | Conventional example 1 | 820 | 780 | 0.5 | - | - | F+P | 239 | F+P | 239 | 0.0 | 1.0 | Air cooling after forging |
| 14 | | Conventional example 2 | 820 | 780 | 55 | 80 | - | M | 342 | M | 339 | 0.9 | 4.1 | Entire quenching and tempering, after forging |
| 15 | 2 | Invention example 1 | 1150 | 1050 | 33 | 231 | 542 | M | 342 | F+P | 249 | 37.3 | 1.1 | Hole-shaped nozzle (only outer surface) |

EP 2 103 696 A1

12

(continued)

| No. | Steel type | Cooling apparatus | Hot forging temperature (°C) | Cooling start temperature (°C) | Cooling rate (°C/s) | Cooling stop temperature (°C) | Heat recuperation maximum temperature | Boundary portion (joint portion) | | Flange portion | | Hardness increase rate | Machining time ratio | Remarks |
|---|---|---|---|---|---|---|---|---|---|---|---|---|---|---|
| | | | | | | | | Microstructure* | Hardness (Hv) | Microstructure* | Hardness (Hv) | (%) | | |
| 16 | | Invention example 2 | 1150 | 1050 | 34 | 228 | 538 | M | 352 | F+P | 242 | 45.5 | 1.2 | Hole-shaped nozzle (inner and outer surfaces) |
| 17 | | Invention example 3 | 1150 | 1050 | 32 | 239 | 564 | M | 358 | F+P | 251 | 42.6 | 1.2 | Slit-shaped nozzle (only outer surface) |
| 18 | | Comparative example 1 | 1150 | 1050 | 31 | 234 | 425 | M | 397 | M+B | 348 | 14.1 | 4.6 | Vertically arranged shaft, cooled from above with hole-shaped nozzle |

| No. | Steel type | Cooling apparatus | Hot forging temperature (°C) | Cooling start temperature (°C) | Cooling rate (°C/s) | Cooling stop temperature (°C) | Heat recuperation maximum temperature | Boundary portion (joint portion) | | Flange portion | | Hardness increase rate | Machining time ratio | Remarks |
|---|---|---|---|---|---|---|---|---|---|---|---|---|---|---|
| | | | | | | | | Microstructure* | Hardness (Hv) | Microstructure* | Hardness (Hv) | (%) | | |
| 19 | | Comparative example 2 | 1150 | 1050 | 35 | 229 | 396 | M | 391 | M+B | 362 | 8.0 | 4.1 | Horizontally arranged shaft, cooled laterally with hole-shaped nozzle |
| 20 | | Conventional example 1 | 1150 | 1050 | 0.5 | - | - | F+P | 237 | F+P | 239 | -0.8 | 1.0 | Air cooling after forging |
| 21 | | Conventional example 2 | 1150 | 1050 | 53 | 80 | - | M | 362 | M | 358 | 1.1 | 3.9 | Entire quenching and tempering, after forging |

*Microstructure M: Martensite, B: Bainite, F: Ferrite, P: Pearlite

As shown in Table 2, partial cooling of the flange base portion was conducted reliably by using the cooling apparatus according to the present invention. As a result, a forged product was obtained, wherein the microstructure of the cooled region was tempered Martensite or Bainite or a mixed microstructure thereof, the microstructure of the flange portion was Ferrite-Pearlite or Bainite, and the hardness ratio of the two was 1.36 to 1.45. Furthermore, the evaluation result of the machinability of the flange portion was 1.2 times or less of that in the conventional process and was about 1/3 or less of that of the forged product which had been subjected to conventional quenching and tempering.

On the other hand, regarding Comparative examples, an increase in hardness of the flange portion was observed on the grounds that the cooling water spread over the flange portion in the cooling of the flange base portion. Therefore, the evaluation result of the machinability was poor as compared with that of Invention examples.

**Claims**

1. A method for cooling a hot forged part having a flange portion and a axial portion, the method **characterized by** comprising the steps of supporting the hot forged part in such a way that the axial direction of the axial portion agrees with a vertical direction during hot forging of the hot forged part or after the hot forging and blowing a coolant locally on the boundary portion between the flange portion and the axial portion from below the flange portion.

2. An apparatus for cooling a hot forged part having a flange portion and a axial portion, the apparatus **characterized by** comprising a support portion to support in such a way that the axial portion of the hot forged part is arranged in a vertical direction and a cooling nozzle which is disposed below the flange portion of the hot forged part supported by the support portion and which blows a coolant on the boundary portion between the flange portion and the axial portion.

3. The apparatus for cooling a hot forged part according to Claim 2, **characterized in that** the cooling nozzle can conduct the blowing from a plurality of places in a circumferential direction of the hot forged part.

4. The apparatus for cooling a hot forged part according to Claim 3, **characterized in that** the cooling nozzle is arranged in the shape of a ring around the axial portion serving as a center axis.

5. The apparatus for cooling a hot forged part according to Claim 2, **characterized in that** the cooling nozzle comprises one slit or two or more slits which is arranged in the shape of a ring around the axial portion serving as a center axis of the hot forged part and wherein the slit serves as an ejection hole of the coolant.

6. The apparatus for cooling a hot forged part according to any one of Claims 2 to 5, **characterized in that** the support portion can support the hot forged part rotating about the axial portion serving as a center axis.

7. A method for manufacturing a hot forged part comprising the steps of hot-forging a steel material so as to shape into a part having a flange portion and a axial portion, supporting the part after forging in such a way that the axial direction of the axial portion agrees with a vertical direction, and blowing a coolant on the boundary portion between the flange portion and the axial portion from below the flange portion so as to cool the boundary portion locally.

FIG. 1

FIG.2a      FIG.2b      FIG.2C      FIG.2d

FIG.3

FIG.4

FIG.5

FIG.6

FIG.7a

FIG.7b

COOLANT

FIG.8

FIG.9

FIG.10

FIG.11a

FIG.11b

## INTERNATIONAL SEARCH REPORT

| | International application No. |
|---|---|
| | PCT/JP2007/075340 |

**A. CLASSIFICATION OF SUBJECT MATTER**
*C21D9/00*(2006.01)i, *B21K1/12*(2006.01)i, *B21K29/00*(2006.01)i, *C21D1/00* (2006.01)i

According to International Patent Classification (IPC) or to both national classification and IPC

**B. FIELDS SEARCHED**

Minimum documentation searched (classification system followed by classification symbols)
C21D9/00-9/44, C21D9/50, B21J1/00-13/14, B21J17/00-19/04, B21K1/00-31/00, B21K29/00, C21D1/00-1/84, C21D7/00-8/10, F27D9/00

Documentation searched other than minimum documentation to the extent that such documents are included in the fields searched
Jitsuyo Shinan Koho          1922-1996     Jitsuyo Shinan Toroku Koho    1996-2008
Kokai Jitsuyo Shinan Koho    1971-2008     Toroku Jitsuyo Shinan Koho    1994-2008

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2005-232581 A  (JFE Steel Corp.), 02 September, 2005 (02.09.05), Par. No. [0034] (Family: none) | 1-7 |
| A | JP 2005-036318 A  (United Technologies Corp.), 10 February, 2005 (10.02.05), Claims & EP 1498500 A2          & RU 2304173 C2 & US 2005/12250 A1 | 1-7 |
| A | JP 2005-350769 A  (Sumitomo Metal Industries, Ltd.), 22 December, 2005 (22.12.05), Par. Nos. [0042] to [0050] & CA 2507286 A1          & US 2005/268995 A1 | 1-7 |

☐ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13 March, 2008 (13.03.08) | 25 March, 2008 (25.03.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**REFERENCES CITED IN THE DESCRIPTION**

**Patent documents cited in the description**

- JP 3100492 B
- JP 2936198 B